# EUROPÄISCHE PATENTSCHRIFT

(11) **EP 0 393 630 B1**
(45) Veröffentlichungstag und Bekanntmachung des Hinweises auf die Patenterteilung: **30.08.1995**
(21) Anmeldenummer: 90107358.5
(22) Anmeldetag: 18.04.1990
(51) Int. Cl.: C03B 40/027, C03B 9/347, B05B 15/04, B05B 1/14

(54) **Sprüheinrichtung zum Besprühen von Formgebungsteilen an einer Formgebungsmaschine**
Spray system for lubricating moulds of a glass moulding machine
Dispositif pour la lubrification des moules à une machine à verrerie

(30) Priorität: 18.04.1989 DE 3912718
(43) Veröffentlichungstag der Anmeldung: 24.10.1990
(73) Patentinhaber: Findag Corporation N.V., Curacao (AN)
(72) Erfinder: Scherber, Wolfgang, D-7910 Neu Ulm/Offenhausen (DE); Langbein, Walter, D-7900 Ulm-Eselsberg (DE)
(74) Vertreter: Weickmann, Heinrich, Dipl.-Ing.

(56) Entgegenhaltungen:
- EP-A- 0 127 564
- DE-B- 1 934 072
- DE-B- 2 103 378
- US-A- 4 409 010

## Beschreibung

Die Erfindung betrifft eine Sprüheinrichtung zum Besprühen von Formgebungsteilen an einer Formgebungsmaschine, insbesondere einer Hohlglasformgebungsmaschine, umfassend mindestens eine durch Sprühmitteldruckbeaufschlagung zu öffnende Sprühdüse.

Eine solche Sprüheinrichtung ist aus der EP-A-0 127 564 bekannt. Bei der bekannten Sprüheinrichtung ist die Richtung des Sprühstrahls durch die Form des Düsenkörpers eindeutig festgelegt, so daß die Einsprührichtung gegenüber der jeweiligen Hohlglasform nur dadurch justiert werden kann, daß der Düsenkörper verschwenkt oder verschoben wird. Das Verschwenken und Verschieben des Düsenkörpers erfordert eine genaue Justierung, so daß die Neueinstellung des Düsenkörpers etwa auf verschiedene Hohlglasformen jeweils eine mühsame Tätigkeit ist, die einen längeren Stillstand der Formgebungsmaschine erforderlich macht und damit die Investitionskostenrendite der sehr kostspieligen Hohlglasformgebungsmaschine herabsetzt.

Der Erfindung liegt die Aufgabe zugrunde, die Justierung des Sprühstrahls zu erleichtern.

Zur Lösung dieser Aufgabe wird erfindungsgemäß vorgeschlagen, daß der Ausfluß der Sprühdüse von einem abnehmbaren und auswechselbaren Strahlrichterelement eingeschlossen ist, welches stromabwärts angrenzend an einen Düsenausfluß einen Verteilerraum begrenzt und anschließend an diesen Verteilerraum mindestens eine Richtstrahlbohrung besitzt.

Die Erfindung beruht auf der Erkenntnis, daß man mit einer verhältnismäßig geringen Anzahl von Strahlrichterelementen die im Regelfall vorkommenden Sprührichtungen beherrschen kann, so daß es unter Umständen nur eines einfachen Austausches des jeweiligen Strahlrichterelements bedarf, um eine gewünschte Sprührichtung festzulegen. Durch das Befestigen des Strahlrichterelements an der jeweiligen Sprühdüse wird die Lage des Strahlrichterelements eindeutig festgelegt.

Die Sprühdüse ist im Fall von Hohlglasformgebungsmaschinen zum Versprühen von Schmier- und Trennmittel bestimmt, etwa zum Versprühen von Graphitsuspension. Mit der Sprühdüse können dabei sowohl die inneren Formflächen der gegebenenfalls geteilten Hohlglasformen als auch die Mündungsringanschlußflächen besprüht werden, in denen die dem Umsetzen der Hohlglaskörper in Nachbearbeitungsformen dienenden zweigeteilten Mündungsringe an den eigentlichen Hohlglasformen anliegen.

Wegen Einzelheiten der Funktion der Hohlglasformgebungsmaschine wird auf die EP-A-0 127 564 verwiesen, in der insbesondere auch die Möglichkeit beschrieben ist, mit ein und derselben Sprühdüse durch entsprechende Sprühstoßsteuerung sowohl die Innenflächen der Hohlglasformen als auch die Mündungsringanschlußflächen zu besprühen. Von dieser Möglichkeit wird auch bei der erfindungsgemäßen Sprüheinrichtung Gebrauch gemacht.

Daneben kann die erfindungsgemäße Sprüheinrichtung je nach der Art der jeweiligen Formgebungsmaschine z.B. Druckgießmaschinen, Schmiedemaschinen oder Tiefziehmaschinen auch zum Versprühen von anderen Sprühmitteln verwendet werden.

Bei Formgebungsmaschinen und insbesondere bei Hohlglasformgebungsmaschinen besteht häufig das Problem, die Sprüheinrichtung in sehr beengtem Raum zwischen übrigen Bauteilen der Formgebungsmaschine unterzubringen insbesondere dann, wenn - wie bei Hohlglasformgebungsmaschinen - während des Betriebsablaufs eine Übergabebewegung der entsprechenden Formlinge stattfindet und deshalb die Bewegungsbahnen für den überzugebenden Formling von Einrichtungsteilen freigehalten werden muß. Es wird deshalb im Hinblick auf Platzersparnis, aber auch im Hinblick auf raschen Austausch der Strahlrichterelemente mehrerer Sprühdüsen vorgeschlagen, daß bei baulicher Zusammenfassung mehrerer Sprühdüsen, insbesondere eines Paares von Sprühdüsen, diesen getrennte Strahlrichterplatten mit je einer Richtstrahlbohrung oder eine gemeinsame Strahlrichterplatte mit je einer Richtstrahlbohrung zugeordnet sind.

Wenn die Sprühdüse einen in einen Aufnahmeblock eingesetzten Düsenkörper umfaßt und das Strahlrichterelement an dem Aufnahmeblock befestigt wird, so kann das Strahlrichterelement gleichzeitig der Sicherung des Düsenkörpers in dem Aufnahmeblock dienen, d.h. verhindern, daß der Düsenkörper unter dem Druck des Sprühmittels aus dem Aufnahmeblock ausgeworfen wird. Dies führt zu einer wesentlichen Erleichterung des Aufbaus der Sprüheinrichtung. Um dabei zu erreichen, daß bei dem Austausch eines Strahlrichterelements lediglich dieses gehandhabt werden muß, die übrige Sprüheinrichtung unverändert bleibt, wird weiter vorgeschlagen, daß der Düsenkörper in dem Aufnahmeblock vorgesichert ist, beispielsweise durch Reibschluß. Es können dann beim Wechsel eines Strahlrichterelements keine Teile verlorengehen. Das Strahlrichterelement kann selbst einteilig ausgeführt sein, beispielsweise in Form einer Platte, die lediglich eine Ausnehmung zur Bildung des Verteilerraums und ggfs. zum Übergreifen eines Teils des jeweiligen Düsenkörpers umfaßt und außerdem die jeweilige Richtstrahlbohrung bzw. Richtstrahlbohrungen.

Zur weiteren Vereinfachung des Anbringens der Sprüheinrichtung an einer mit mehreren Ausformungsstellen ausgeführten Formgebungsmaschine wird vorgeschlagen, daß der Aufnahmeblock an einer zur Aufnahme einer Mehrzahl von Aufnahmeblöcken ausgebildeten Verteilerschiene befestigt ist, daß in dem Aufnahmeblock Anschlußleitungen ausgebildet sind und daß diese Anschlußleitungen an Zuführungsleitungen der Verteilerschiene angeschlossen sind.

Zur optimalen Phaseneinstellung der Sprühstrahlstöße ist es dabei vorteilhaft, wenn bei Vorhandensein einer Mehrzahl von Sprühdüsen mindestens ein Teil dieser Sprühdüsen jeweils unabhängig von anderen mit Sprühmittel versorgt sind.

Die Justierung der Sprühdüsen kann weiter dadurch erleichtert werden, daß der Aufnahmeblock in mindestens einer Richtung, vorzugsweise in drei zueinander senkrechten Richtungen verstellbar gelagert ist.

Bei einer solchen Lösung kommt man mit einer sehr geringen Anzahl von verschiedenen Strahlrichterelementen aus. Zur weiteren Erleichterung können die jeweiligen Positionen des Aufnahmeblocks listenmäßig oder sonstwie gespeichert und durch entsprechende Einstellmarken reproduzierbar sein, so daß die verschiedensten Richtstrahlpositionen durch Auswahl weniger Koordinatenpositionen des Aufnahmeblocks und entsprechende Wahl der Strahlrichterelemente eingestellt werden können. Beispielsweise ist es denkbar, daß die Verteilerschiene in ihrer Längsrichtung durch eine Schwalbenschwanzführung oder dergleichen an einem Verteilerschienenträger verschiebbar ist und daß der Verteilerschienenträger seinerseits in einer Koordinateneinstellvorrichtung mit zwei zueinander und zur Längsrichtung der Verteilerschiene senkrechten Einstellrichtungen verstellbar ist.

Damit der Sprühstrahl am Austrittsende der Richtstrahlbohrung gleichmäßig und ohne Verwirbelung austritt, wird weiterhin vorgeschlagen, daß die Länge der Richtstrahlbohrung dem Drei- bis Siebenfachen, vorzugsweise dem Fünffachen, ihres Durchmessers entspricht.

Um ein Nachtröpfeln des Sprühmittels aus dem Verteilerraum über die Richtstrahlbohrung nach Beendigung des Sprühvorganges zu verhindern, ist weiterhin vorgesehen, daß der Durchmesser der Richtstrahlbohrung kleiner ca. 0,5 mm, vorzugsweise ca. 0,2 mm, ist.

Die vorgeschlagene Sprühvorrichtung kann beispielsweise bei einer Hohlglasformgebungsmaschine eingesetzt werden. Die zu besprühenden Formgebungsteile können bei einer derartigen Maschine zwei einen ersten Formhohlraumabschnitt bildende und aus einer vertikalen Teilungsebene auseinanderfahrbare Formhälften sowie eine an einer einer Glastropfenabgabestelle gegenüberliegenden Seite des ersten Formhohlraumabschnitts angeordnete und einen zweiten Formhohlraumabschnitt bildende Mündungsringeinheit umfassen, die zwei ebenfalls aus der vertikalen Teilungsebene auseinanderfahrbare Mündungsringhälften und einen im Inneren der Mündungsringeinheit koaxial zu deren Längsachse angeordneten Deckring aufweist, wobei die Mündungsringhälften in ihrer Grundstellung beidseits des zweiten Formhohlraumabschnitts mit Trennflächen einander gegenüberliegen und zwischen mindestens zwei zusammengehörigen Trennflächen ein zu dem Deckring führender Schmierspalt auch in der Schließstellung der Mündungsringhälften gebildet ist. Der Deckring, der schwimmend gelagert sein kann, hat dabei die Funktion, eine axial gerichtete Endfläche des Formkörpers zu bilden. Nachdem ein Glastropfen von der Glastropfenabgabestelle in die Form gelangt ist, wird dieser Tropfen durch von oben eingebrachte Druckluft in der Form festgeblasen. Damit dabei die in dem Formhohlraum befindliche Luft zumindest teilweise aus dem Formhohlraum austreten kann, ist der durch die Mündungsringhälften gebildete Abluftspalt vorgesehen. Hierdurch wird auch die Versorgung des Deckringes mit Schmiermittel begünstigt.

Nach einem weiteren Gesichtspunkt betrifft die Erfindung eine Sprüheinrichtung an einer Hohlglasformgebungsmaschine mit einer Mehrzahl von teilbaren Hohlglasformen, die in horizontaler Reihe hintereinander angeordnet und in einer zur Reihenrichtung parallelen vertikalen Teilungsebene geteilt sind, mit einer entsprechenden Mehrzahl von Glastropfenabgabestellen in lotrechter Flucht über den nach oben offenen Hohlglasformen und mit einer Mehrzahl von Sprühdüsen zum Besprühen der Hohlglasformen.

Eine derartige Sprüheinrichtung ist aus der US-A-4 409 010 bekannt. Bei dieser Sprüheinrichtung tritt das Problem zweier widerstreitender Forderungen auf, nämlich einerseits der Forderung nach möglichst gleichmäßigem Besprühen der Hohlglasformen mit Sprühmittel und andererseits der Forderung, daß die Sprühdüsen das Einfüllen von Glasmasse aus den Glastropfenabgabestellen in die Hohlglasformen nicht behindern dürfen. Bei der bekannten Sprüheinrichtung sind die den Hohlglasformhälften zugeordneten Sprühdüsen in zwei Verteilerschienen und die den Mündungsringen zugeordneten Sprühdüsen in einer Mehrzahl von Sprühdüsenkörpern vorgesehen. Die beiden Verteilerschienen sind zum Besprühen der voneinander getrennten, aufgeklappten Formhälften mit Sprühmittel angeordnet und bilden daher mit der Teilungsebene einen dem Öffnungswinkel der vollständig geöffneten Hohlglasformen entsprechenden Winkel. Auf diese Weise wird eine Beeinträchtigung des Befüllens der Hohlglasformen mit Glas durch die Sprühdüsen und deren zugeordnete Bauteile vermieden. Die aus der US-A-4 409 010 bekannte Sprüheinrichtung ist konstruktiv aufwendig, da zum Besprühen der Hohlglasformen eine Vielzahl von Sprüheinheiten erforderlich ist, und diesen Sprüheinheiten darüber hinaus Sprühmittel und Druckluft separat zugeführt werden muß.

Bei der erfindungsgemäßen Sprüheinrichtung sind die Sprühdüsen an einer parallel zur Teilungsebene im Bereich der Glastropfenabgabestellen angeordneten, mindestens eine Zufuhrleitung aufweisenden Verteilerschiene zwischen benachbarten Glastropfenabgabestellen und gegebenenfalls angrenzend an endständige Glastropfenabgabestellen annähernd in der Teilungsebene der Hohlglasformen angeordnet und mit der Zufuhrleitung verbunden, wodurch neben der Erzielung einer zuverlässigen und vollständigen Besprühung der Formgebungsteile auch die Justierung der Sprühstrahlen vereinfacht wird, da lediglich eine Einstellung in die beiden Richtungen der vertikalen Teilungsebene nicht aber quer zu dieser Teilungsebene erfolgen muß, wie dies beispielsweise bei einer Anordnung der Sprühdüsen außerhalb der Teilungsebene der Fall wäre.

In den abhängigen Ansprüchen 14 bis 19 sind vorteilhafte und bevorzugte Weiterbildungen des Anspruchs 13 angegeben.

Insbesondere kann man wiederum im Hinblick auf die Berücksichtigung räumlich beengter Verhältnisse zwischen jeweils zwei aufeinanderfolgenden Glastropfenabgabestellen jeweils zwei gegebenenfalls baulich zusammengefaßte Sprühdüsen gegebenenfalls mit Richtstrahlbohrungen anordnen, wobei jeweils eine dieser beiden Sprühdüsen je einer der durch die beiden benachbarten Glastropfenabgabestellen versorgten Hohlglasformen zugeordnet ist, während jeweils eine endständige Sprühdüse und die gegebenenfalls dazugehörige Richtstrahlbohrung der benachbarten endständigen Hohlglasform zugeordnet ist, so daß jede Hohlglasform jeweils zwei Sprühdüsen und deren gegebenenfalls zugehörige Richtstrahlbohrungen zugeordnet sind.

Werden jeweils zwei zu einer Hohlglasform gehörende Sprühdüsen von einer gemeinsamen Sprühmittelquelle über eine gemeinsame Zuführleitung mit Sprühmittel versorgt, so kann jede Form individuell mit Sprühmittel versorgt werden. Dies ist insbesondere dann von Bedeutung, wenn die einzelnen Formen unterschiedlichen Belastungen ausgesetzt sind, insbesondere unterschiedlichen thermischen Belastungen, wie dies beispielsweise zwischen den äußeren und inneren Formen der Fall ist.

Aus der EP-A-0 127 564 ist eine Sprüheinrichtung für eine Hohlglasform zur Herstellung eines einzelnen Hohlglasrohlings bekannt. Der bekannten Hohlglas-Einzelform ist ein Sprühkopf mit einer Sprühdüse zugeordnet, der neben der einen Glastropfenabgabestelle angebracht ist.

Aus der DE-B-19 34 072 ist eine Sprüheinrichtung bekannt, bei welcher der sich aus den vorstehend genannten widerstreitenden Forderungen ergebende Konflikt dadurch gelöst wird, daß die Sprühdüsen an einer um eine horizontale und zur Teilungsebene orthogonal verlaufende Achse verschwenkbaren Verteilerschiene angeordnet sind. Die Sprühdüsen werden zum Besprühen der Hohlglasformen zwischen diesen hindurch geschwenkt, wenn die Hohlglasformhälften voneinander getrennt sind. Zu diesem Verschwenken ist eine gesonderte Mechanik und ein motorischer Antrieb erforderlich.

Bei der aus der DE-B-21 03 378 bekannten Sprüheinrichtung sind die Sprühdüsen an einer um eine horizontale und zur Teilungsebene parallel verlaufende Achse verschwenkbaren Verteilerschiene angeordnet. Zum Besprühen der Hohlglasformen werden die Sprühdüsen unmittelbar über die offenen Enden der Hohlglasformen gebracht und anschließend wieder in eine Ruhestellung zurückgeschwenkt, in welcher sie das Befüllen der Hohlglasformen mit Glasmasse nicht behindern.

Die beiliegenden Figuren erläutern die Erfindung an Hand eines Ausführungsbeispiel, nämlich als Teil einer Hohlglasformgebungsmaschine. Es stellen dar:
- Fig. 1: eine Gruppe von Hohlglasformen in Reihenanordnung mit zugehörigen Sprühdüsen;
- Fig. 2: einen Schnitt nach Linie II-II der Fig. 1;
- Fig. 3: eine schematische Draufsicht zu Fig. 1;
- Fig. 4: einen Aufnahmeblock für zwei Sprühdüsen im Schnitt nach Linie IV-IV der Fig. 5;
- Fig. 5: einen Schnitt nach Linie V-V der Fig. 4;
- Fig. 6: den Einsprühvorgang bei einer Hohlglasform mittels zweier Sprühstellen;
- Fig. 7: eine Draufsicht zu Fig. 6;
- Fig. 8: eine Draufsicht auf eine Mündungsringeinheit;
- Fig. 9: einen Schnitt entlang der Linie IX-IX der Fig. 8; und
- Fig. 10: die Anordnung mehrerer Sprühdüsen-Aufnahmeblöcke mittels einer Verteilerschiene an einem Koordinateneinstellwerk.

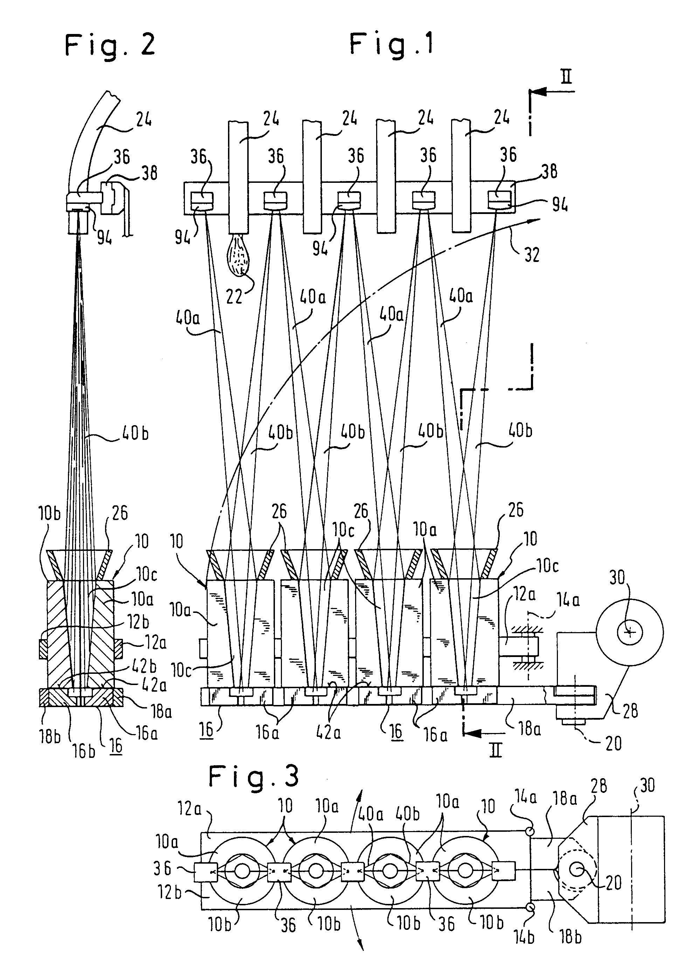

In Fig. 2 ist eine Hohlglasform 10 dargestellt, die aus zwei Hohlglasformhälften 10a,10b besteht. Gemaß Fig. 1 und 3 sind vier solche Hohlglasformen 10 in Reihe angeordnet. Die Hohlglasformhälften 10a sind an einem Trägerarm 12a angeordnet, der um eine Schwenkachse 14a schwenkbar ist. Die Hohlglasformhälften 10b sind an einem Trägerarm 12b angeordnet, der um eine Schwenkachse 14b schwenkbar ist. Es kann aber auch für die beiden Hohlglasformhälften 10a,10b eine gemeinsame Schwenkachse vorgesehen werden, so daß sich die Hohlglasformen 10 scherenartig öffnen bzw. schließen. Eine solche gemeinsame Schwenkachse wäre dann in den Fig. 1 und 3 links an den Hohlglasformen 10 angeordnet. In Fig. 3 sind die Hohlglasformhälften 10a,10b zusammengefahren unter Schließung des jeweiligen Formhohlraums 10c (vgl. Fig. 2). An der Unterseite der Hohlglasformhälften 10a,10b sind Mündungsringeinheiten 16 angebracht, die jeweils zwei Mündungsringhälften 16a,16b und einen Deckring 16c (siehe Figur 9) umfassen. Der Hohlraum 10c setzt sich also aus einem ersten durch die Hohlglasformhälften 10a,10b gebildeten Formhohlraumabschnitt und einem zweiten durch die Mündungsringhälften 16a,16b und den Deckring 16c gebildeten Formhohlraumabschnitt zusammen. Die Mündungsringhälften 16a,16b sind an Schwenkarmen 18a bzw. 18b angeordnet. Die Schwenkarme 18a,18b sind um eine gemeinsame Schwenkachse 20 schwenkbar, um die Mündungsringeinheiten 16 zu öffnen bzw. zu schließen. Es besteht aber auch die Möglichkeit, den Öffnungs- und Schließvorgang für die Mündungsringhälften 16a,16b so zu gestalten, daß diese hierzu nicht um eine gemeinsame Achse schwenken, sondern senkrecht zur Teilungsebene voneinander weg bzw. aufeinander zu gefahren werden. Erfolgt der Öffnungs- und Schließvorgang in dieser Weise, so ändern sich die im folgenden im Hinblick auf die Schwenkachse 20 erläuterten Bewegungen der Mündungsringhälften 16a,16b entsprechend. Gemäß Fig. 2 sind die Mündungsringhälften 16a,16b zusammengefahren, d.h. die Mündungsringeinheit 16 ist geschlossen. Glastropfen 22 werden von Glastropfenabgaberohren 24 in die geschlossenen Hohlglasformen 10 durch Fülltrichter 26 zum Einfallen gebracht, während auch die Mündungsringhälften 16a,16b ihre Schließstellung gemäß Fig. 2 einnehmen.

Nach Ersatz des Fülltrichters 26 durch einen oberen Abschlußkörper (nicht eingezeichnet) kann dann von unten durch die jeweilige Mündungsringeinheit 16 ein (nicht dargestellter) Blas- oder Pressdorn eingeführt werden, so daß der Glastropfen 22 innerhalb des Formhohlraums 10c zu einem vorformling aufgeblasen bzw. gepreßt werden kann, der bereits einen durch die Mündungsringeinheit 16 erfaßten Hals besitzt. Die Hohlglasformhälften 10a,10b werden dann voneinander abgeschwenkt, indem die Trägerarme 12a,12b um die Schwenkachsen 14a,14b verschwenkt werden. Dabei bleiben die Vorformlinge von den Hälften 16a,16b der Mündungsringeinheiten 16 erfaßt, die nach wie vor geschlossen bleiben. Die Schwenkarme 18a,18b sind auf einem Schwenkkörper 28 gelagert, der um eine horizontale Schwenkachse 30 schwenkbar ist. Nach dem öffnen der Hohlglasformen 10 durch Auseinanderschwenken der Trägerarme 12a,12b können die Schwenkarme 18a,18b gemeinsam bei nach wie vor geschlossenen Mündungsringeinheiten 16 zwischen den auseinandergetretenen Hohlglasformhälften 10a,10b in Pfeilrichtung 32 gemäß Fig. 1 ausgeschwenkt werden, so daß die Vorformlinge nach einer Schwenkbewegung der Schwenkarme 18a,18b um die schwenkachse 30 um beispielsweise 180° an Weiterbearbeitungsformen übergeben werden können. Dort treten dann die Schwenkarme 18a,18b durch Schwenken um die Schwenkachse 20 auseinander, so daß sich die Mündungsringhälften 16a,16b voneinander absetzen und die inzwischen von den Weiterbearbeitungsformen übernommenen Vorformlinge freigegeben. Die Schwenkarme 18a,18b schwenken dann entgegen der pfeilrichtung 32 um die Schwenkachse 30 wieder in die Stellung gemäß Fig. 1 und 2 zurück. Auf diesem Rückschwenkweg nähern sich die Schwenkarme 18a,18b um ihre gemeinsame Schwenkachse 20 wieder an unter erneuter Schließung der Mündungsringeinheiten 16. Die angenäherten Schwenkarme 18a,18b treten zwischen den nach wie vor voneinander abgehobenen Hohlglasformhälften 10a,10b wieder hindurch, bis sie die Unterseite (nach Fig. 1) der Hohlglasformhälften 10a,10b erreicht haben. Anschließend treten die Trägerarme 12a,12b unter Schwenkung um ihre Schwenkachsen 14a wieder zusammen. Dann ist wiederum die Ausgangsstellung erreicht, in der erneut Glastropfen 22 in die Formhohlräume 10c eintreten können. Wegen näherer Einzelheiten wird hierzu erneut auf die EP-A-0 127 564 verwiesen.

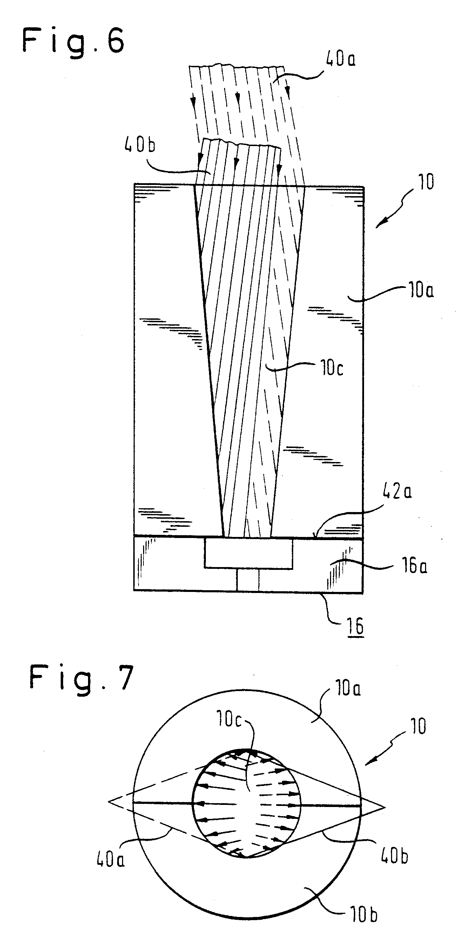

Zwischen aufeinanderfolgenden Glastropfenabgaberohren 24 (vgl. Fig. 1) sind Aufnahmeblöcke 36 von Sprühdüsen angeordnet, und zwar annähernd in der Teilungsebene der Hohlglasformen 10. Diese Aufnahmeblöcke 36 sind an einer verteilerschiene 38 angebracht. In den beiden endständigen Aufnahmeblöcken 36 (vgl. Fig. 1) ist jeweils nur eine Düse vorhanden oder betriebsbereit. In den übrigen Aufnahmeblöcken 36 sind jeweils zwei Sprühdüsen angeordnet. Demgemäß tritt aus den endständigen Aufnahmeblöcken 36 jeweils nur ein Sprühstrahl 40a bzw. 40b aus, während aus den mittleren Aufnahmeblöcken 36 jeweils sowohl ein Sprühstrahl 40a als auch ein Sprühstrahl 40b austritt. Jedem Formhohlraum 10c ist somit sowohl ein Sprühstrahl 40a als auch ein Sprühstrahl 40b zugeordnet. Die Neigung der Sprühstrahlen 40a und 40b ist dabei eine solche, daß die beiden ein und demselben Formhohlraum 10c zugeordneten Sprühstrahlen 40a und 40b, wie dies aus Fig. 6 entnehmbar ist, jeweils die gesamte Innenoberfläche des Formhohlraums 10c vollständig aussprühen. Der Takt der Sprühstrahlen 40a,40b kann dabei so sein, daß die Sprühstrahlen 40a,40b ausgesprüht werden noch bevor die Hohlglasformhälften 10a,10b wieder vollständig zusammengetreten sind, so daß die Mündungsringhälften 16a,16b an ihren Anschlußflächen 42a,42b ebenfalls getroffen werden. Alternativ ist es auch denkbar, daß eine erste Folge von Sprühstößen jeweils dann ausgelöst wird, wenn die Hohlglasformhälften 10a,10b und die Mündungsringhälften 16a,16b der jeweils in ihre Grundstellung gebracht sind, so daß der Formhohlraum 10c geschlossen ist und im wesentlichen nur die inneren Formflächen der Hohlglasformhälften 10a,10b besprüht werden (vgl. Fig 7). Dann kann eine zweite Folge von Sprühstößen jeweils dann ausgelöst werden, wenn die Mündungsringhälften 16a,16b allein ihre Grundstellung einnehmen, d.h. die Mündungsringeinheiten 16 geschlossen sind, die Hohlglasformhälften 10a,10b sich aber noch weit voneinander entfernt befinden, so daß im wesentlichen nur die Anschlußflächen 42a,42b der Mündungsringhälften 16a,16b von Sprühstößen beaufschlagt werden. All dies ist wieder im Detail in der EP-A-0 127 564 beschrieben.

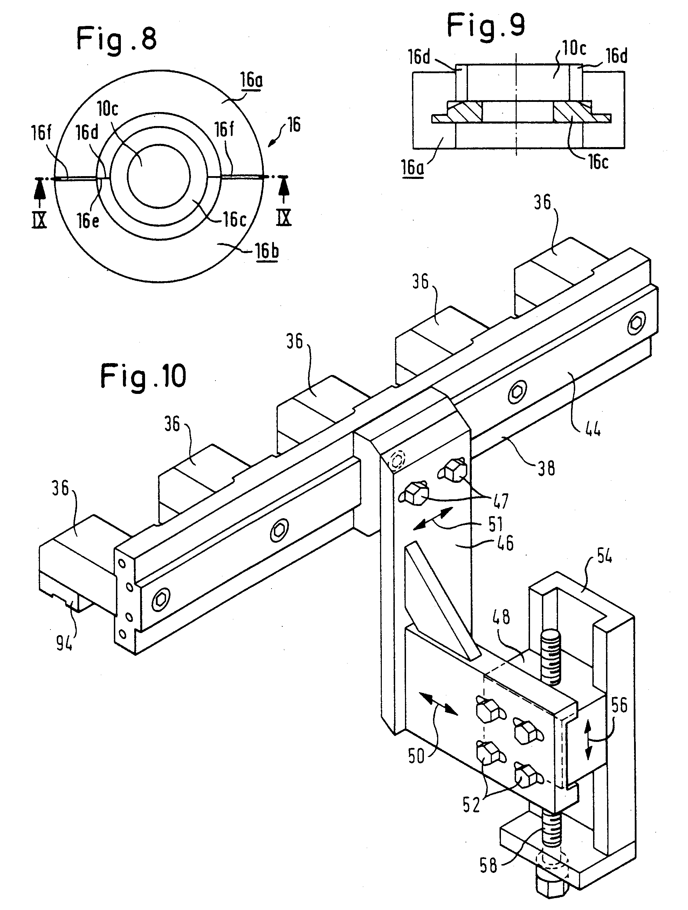

Wie aus Fig. 10 hervorgeht, ist die Verteilerschiene 38 mittels eines Schwalbenschwanzprofils 44 in einem Verteilerschienenträger 46 verschiebbar und durch Klemmschrauben 47 in Pfeilrichtung 51 verstellbar. Der Verteilerschienenträger 46 ist an einem Trägerblock 48 in Pfeilrichtung 50 seitenverstellbar geführt und durch Klemmschrauben 52 feststellbar. Der Trägerblock 48 ist an einer Trägerschiene 54 in Pfeilrichtung 56 mittels eines Spindeltriebs 58 höhenverstellbar. Auf diese Weise lassen sich beliebige Einstellungen der Aufnahmeblöcke 36 einstellen, wobei die Einstellungen durch nicht eingezeichnete Markierungen überprüfbar sind. Für die Herstellung bestimmter Produkte können Listen geführt werden, um die jeweils richtigen Einstellpositionen für die Aufnahmeblöcke wählen zu können und damit die Sprühstrahlen 40a,40b richtig einstellen zu können.

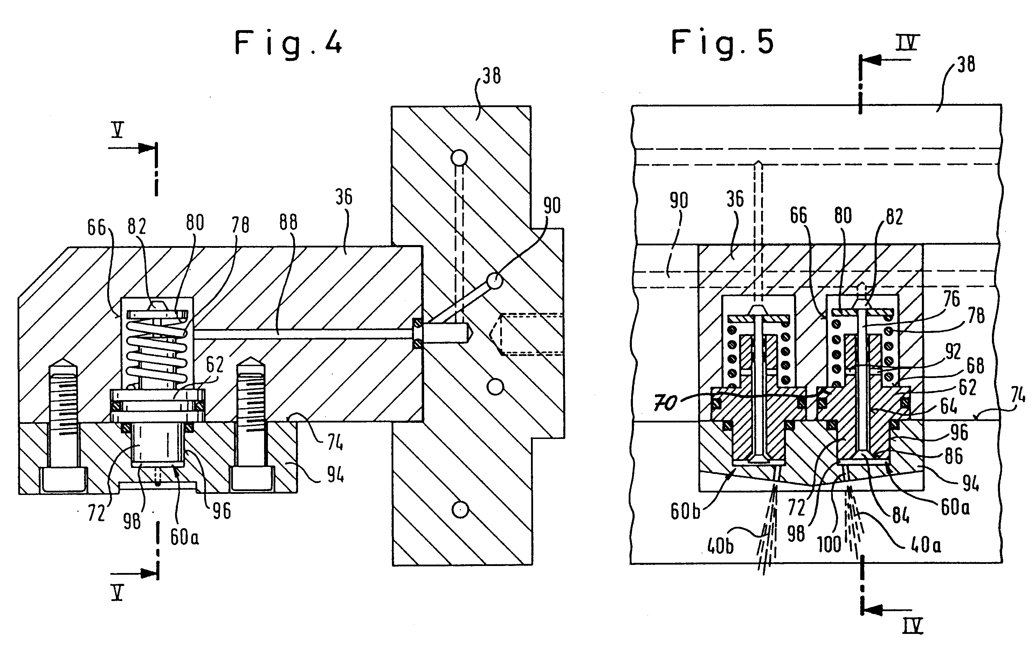

In den Fig. 4 und 5 sind Einzelheiten der Aufnahmeblöcke 36 dargestellt. Der Aufnahmeblock 36 ist an der Verteilerschiene 38 durch nicht eingezeichnete Befestigungsmittel festgestellt. In dem Aufnahmeblock 36 sind zwei Sprühdüsen 60a,60b vorgesehen, deren eine 60a der Erzeugung eines Sprühstrahls 40a und deren andere 60b der Erzeugung eines Sprühstrahls 40b dient. Da die Düsen identisch sind, genügt es, eine von ihnen, die Düse 60a, zu beschreiben.

Die Düse 60a ist in einem Düsenkörper 62 angeordnet, der von einem Düsenkanal 64 durchsetzt ist. Der Düsenkörper 62 ist in eine gestufte Aufnahmebohrung 66 des Aufnahmeblocks 36 eingesetzt und liegt mit einer Stützfläche 68 gegen eine Schulterfläche 70 des Aufnahmeblocks 36 an. Ein Vorsprung 72 ragt über eine untere Endfläche 74 des Aufnahmeblocks 36 vor. In den Düsenkanal 64 ist eine Düsennadel 76 eingeführt. Eine Schraubendruckfeder 78 stützt sich an der Stützfläche 68 ab und wirkt gegen eine Spannplatte 80, die gegen einen Kopf 82 der Düsennadel 76 anliegt. Dadurch wird ein konischer Düsenverschlußkörper 84 gegen den ebenfalls konischen Düsenausfluß 86 der Düse 60a gespannt, wodurch die Düse 60a verschlossen wird. An die Aufnahmebohrung 66 ist eine Anschlußleitung 88 angeschlossen (vgl. Fig. 4), die an der Verbindungsstelle zwischen dem Aufnahmeblock 36 und der Verteilerschiene 38 mit einer Zuführungsleitung 90 in Verbindung steht, wobei die Zuführungsleitung 90 mit einer nicht dargestellten Sprühmittelquelle verbunden ist. Bei Druckgabe in der Zuführungsleitung 90 setzt sich dieser Druck durch Radialbohrungen 92 des Düsenkörpers 62 in den Düsenkanal 64 fort, so daß der konische Verschlußkörper 84 von dem konischen Düsenausfluß 86 abgehoben wird und damit die Düse 60a geöffnet wird.

Mit der gleichen Zuführungsleitung 90 ist die zu der selben Hohlglasform 10 gehörende Sprühdüse 60b des zu dem betrachteten Aufnahmeblock 36 benachbarten Aufnahmeblocks 36 verbunden. Dabei ist jede Zuführleitung 90 für ein zu jeweils einer Hohlglasform 10 gehörendes Paar von Sprühdüsen 60a,60b mit einer Sprühmittelquelle verbunden, wodurch zum einen diese beiden Sprühdüsen 60a,60b mit dem gleichen Druck beaufschlagt werden und zum anderen die Sprühmenge, der Sprühdruck sowie der Sprühzeitpunkt für die Sprühdüsen 60a,60b jeder einzelnen Hohlglasform 10 individuell eingestellt werden können. Es kann aber auch für jede Sprühdüse 60a,60b jeweils eine eigene Zuführleitung 90 und eine eigene Sprühmittelquelle oder aber für die Sprühdüsenpaare 60a,60b mehrerer Hohlglasformen 10 eine gemeinsame Zuführleitung 90 und eine gemeinsame Sprühmittelquelle vorgesehen werden. In Fig. 4 erkennt man entsprechend der Reihenanordnung von vier Hohlglasformen 10 gemäß Fig. 1 insgesamt vier Zuführungsleitungen 90, von denen jeweils eine zwei zu einer gemeinsamen Hohlglasform 10 gehörenden Sprühdüsen 60a,60b zugeordnet ist.

An der unteren Endfläche 74 des Aufnahmeblocks 36 ist eine Strahlrichterplatte 94 befestigt, die eine Aufnahmebohrung 96 für den Vorsprung 72 des Düsenkörpers 62 aufweist. Zwischen dem Vorsprung 72 und der Aufnahmebohrung 96 ist ein Verteilerraum 98 gebildet. Von diesem Verteilerraum 98 geht eine Richtstrahlbohrung 100 aus, welche in der Strahlrichterplatte 94 ausgebildet ist und die Richtung des Sprühstrahls 40a bestimmt. Die Länge der Richtstrahlbohrung 100 entspricht dabei dem drei- bis siebenfachen, vorzugweise dem fünffachen, ihres Durchmessers. Der Durchmesser selber kann dabei kleiner ca. 0,5 mm, vorzugsweise ca. 0,2 mm, sein.

In den Fig. 8 und 9 ist eine in den Fig. 1 - 7 nur schematisch wiedergegebene Mündungsringeinheit 16 detaillierter dargestellt. Die Mündungsringeinheit 16 umfaßt die beiden Mündungsringhälften 16a,16b, die den zweiten Formhohlraumabschnitt bilden, und den Deckring 16c. Wie aus Fig. 8 hervorgeht liegen die beiden Mündungsringhälften 16a,16b beidseits des zweiten Formhohlraumabschnitts mit Trennflächen 16d,16e aneinander an. Von der äußeren Mantelwand der Mündungsringeinheit 16 erstrecken sich entlang der vertikalen Teilungsebene bis zu den Trennflächen 16d,16e zwei Abluftspalte 16f. Die Abluftspalte 16f bestehen auch in der Schließstellung der Mündungsringhälften 16a,16b und dienen dazu, daß die in dem Formhohlraum befindliche Luft bei Beginn des Formgebungsvorganges teilweise aus diesem austreten kann. Hierdurch wird auch die Versorgung des Deckringes 16c mit Schmiermittel begünstigt. Der Deckring 16c schließt den zweiten Formhohlraumabschnitt teilweise nach unten hin ab und bildet so eine axial gerichtete Endfläche für den Hohlglaskörper.

Zu Fig. 5 ist noch nachzutragen, daß die Richtstrahlbohrung 100 von zwei in einem Aufnahmeblock 36 baulich zusammengefaßte Sprühdüsen 60a,60b auch in getrennten Strahrichterplatten 94 vorgesehen sein kann. Dies hat den Vorteil, daß der Ausschuß bei dem komplizierten Bohrvorgang geringer wird, da das Risiko ausgeschlossen ist, daß nach einer gelungenen ersten Bohrung eine zweite Bohrung mißrät. Es ist auch noch nachzutragen, daß die oder eine zusätzliche Teilungsebene zwischen der Strahlrichterplatte 94 und dem Aufnahmeblock 36 auch in der Bodenebene der Verteilerräume 98 angeordnet sein kann, so daß die Gestaltung der Strahlrichterplatte bzw. der Strahlrichterplatten 94 noch einfacher wird.

## Patentansprüche

1. Sprüheinrichtung zum Besprühen von Formgebungsteilen (10a,10b, 16a,16b,16c) an einer Formgebungsmaschine, insbesondere einer Hohlglasformgebungsmaschine, umfassend mindestens eine durch Sprühmitteldruckbeaufschlagung zu öffnende Sprühdüse (60a), dadurch gekennzeichnet,
daß der Ausfluß der Sprühdüse (60a) von einem abnehmbaren und auswechselbaren Strahlrichterelement (94) eingeschlossen ist, welches stromabwärts angrenzend an einen Düsenausfluß (96) einen Verteilerraum (98) begrenzt und anschließend an diesen Verteilerraum (98) mindestens eine Richtstrahlbohrung (100) besitzt.

2. Sprüheinrichtung nach Anspruch 1,
dadurch gekennzeichnet,
daß bei baulicher Zusammenfassung mehrerer Sprühdüsen (60a, 60b), insbesondere eines Paares von Sprühdüsen (60a,60b), diesen getrennte Strahlrichterplatten (94) mit je einer Richtstrahlbohrung (100) oder eine gemeinsame Strahlrichterplatte (94) mit je einer Richtstrahlbohrung (100) zugeordnet sind.

3. Sprüheinrichtung nach einem der Ansprüche 1 und 2,
dadurch gekennzeichnet,
daß die Sprühdüse (60a) einen in einen Aufnahmeblock (36) eingesetzten Düsenkörper (62) umfaßt und daß das Strahlrichterelement (94) an dem Aufnahmeblock (36) befestigbar ist und dabei gleichzeitig der Sicherung des Düsenkörpers (62) in dem Aufnahmeblock (36) dient.

4. Sprüheinrichtung nach Anspruch 3,
dadurch gekennzeichnet,
daß der Düsenkörper (62) in dem Aufnahmeblock (36) vorgesichert ist, beispielsweise durch Reibschluß.

5. Sprüheinrichtung nach einem der Ansprüche 3 und 4,
dadurch gekennzeichnet,
daß der Aufnahmeblock (36) an einer zur Aufnahme einer Mehrzahl von Aufnahmeblöcken (36) ausgebildeten Verteilerschiene (38) befestigt ist, daß in dem Aufnahmeblock (36) Anschlußleitungen (88) ausgebildet sind und daß diese Anschlußleitungen (88) an Zuführungsleitungen (90) der Verteilerschiene (38) angeschlossen sind.

6. Sprüheinrichtung nach einem der Ansprüche 1 bis 5,
dadurch gekennzeichnet,
daß bei Vorhandensein einer Mehrzahl von Sprühdüsen (60a, 60b) mindestens ein Teil dieser Sprühdüsen (60a, 60b) jeweils unabhängig von anderen mit Sprühmittel versorgt sind.

7. Sprüheinrichtung nach einem der Ansprüche 3 bis 6,
dadurch gekennzeichnet,
daß der Aufnahmeblock (36) in mindestens einer Richtung, vorzugsweise in drei zueinander senkrechten Richtungen, verstellbar gelagert ist.

8. Sprüheinrichtung nach Anspruch 7,
dadurch gekennzeichnet,
daß die Verteilerschiene (38) in ihrer Längsrichtung durch eine Schwalbenschwanzführung (44) oder dergl. in einem Verteilerschienenträger (46) verschiebbar ist und daß der Verteilerschienenträger (46) seinerseits in einer Koordinateneinstellvorrichtung (48,54) mit zueinander und zur Längsrichtung der Verteilerschiene (38) senkrechten Einstelleinrichtungen (50,56) verstellbar ist.

9. Sprüheinrichtung nach einem der Ansprüche 1 bis 8,
dadurch gekennzeichnet,
daß die Länge der Richtstrahlbohrung (100) dem Drei- bis Siebenfachen, vorzugsweise dem Fünffachen, ihres Durchmessers entspricht.

10. Sprüheinrichtung nach einem der Ansprüche 1 bis 9,
dadurch gekennzeichnet,
daß der Durchmesser der Richtstrahlbohrung (100) kleiner ca. 0,5 mm, vorzugsweise ca. 0,2 mm, ist.

11. Sprüheinrichtung bei einer Hohlglasformgebungsmaschine nach einem der Ansprüche 1 bis 10,
dadurch gekennzeichnet,
daß die bei der Hohlglasformgebungsmaschine zu besprühenden Formgebungsteile (10a,10b;16) zwei einen ersten Formhohlraumabschnitt bildende und aus einer vertikalen Teilungsebene auseinanderfahrbare Formhälften (10a,10b) sowie eine an einer einer Glastropfenabgabestelle (24) gegenüberliegenden Seite des ersten Formhohlraumabschnitts angeordnete und einen zweiten Formhohlraumabschnitt bildende Mündungsringeinheit (16) umfassen, die zwei ebenfalls aus der vertikalen Teilungsebene auseinanderfahrbare Mündungsringhälften (16a,16b) und einen im Inneren der Mündungsringeinheit (16) koaxial zu deren Längsachse angeordneten Deckring (16c) aufweist, wobei die Mündungsringhälften (16a,16b) in ihrer Grundstellung beidseits des zweiten Formhohlraumabschnitts mit Trennflächen (16d,16e) einander gegenüberliegen und zwischen mindestens zwei zusammengehörigen Trennflächen (16d,16e) ein zu dem Deckring (16c) führender Spalt (16f) auch in der Schließstellung der Mündungsringhälften (16a,16b) gebildet ist.

12. Sprüheinrichtung nach Anspruch 11,
dadurch gekennzeichnet,
daß der Deckring (16c) in der Mündungsringeinheit (16) schwimmend gelagert ist.

13. Sprüheinrichtung an einer Hohlglasformgebungsmaschine mit einer Mehrzahl von teilbaren Hohlglasformen (10), die in horizontaler Reihe hintereinander angeordnet und in einer zur Reihenrichtung parallelen vertikalen Teilungsebene geteilt sind, mit einer entsprechenden Mehrzahl von Glastropfenabgabestellen (24) in lotrechter Flucht über den nach oben offenen Hohlglasformen (10) sowie mit einer Mehrzahl von Sprühdüsen (60a, 60b) zum Besprühen der Hohlglasformen (10),
dadurch gekennzeichnet,
daß die Sprühdüsen (60a, 60b) an einer parallel zur Teilungsebene im Bereich der Glastropfenabgabestellen angeordneten, mindestens eine Zufuhrleitung (90) aufweisenden Verteilerschiene (38) zwischen benachbarten Glastropfenabgabestellen (24) und gegebenenfalls angrenzend an endständige Glastropfenabgabestellen (24) annähernd in der Teilungsebene der Hohlglasformen (10) angeordnet und mit der Zufuhrleitung (90) verbunden sind.

14. Sprüheinrichtung nach Anspruch 13,
dadurch gekennzeichnet, daß die Sprühdüsen (60a, 60b) in wenigstens einem zugeordneten Aufnahmeblock (36) aufgenommen sind.

15. Sprüheinrichtung nach Anspruch 13 oder 14,
dadurch gekennzeichnet,
daß die Sprühdüsen (60a, 60b) bzw. der wenigstens eine Aufnahmeblock (36) seitlich an der Verteilerschiene (38) angeordnet sind.

16. Sprüheinrichtung nach Anspruch 14 oder 15,
dadurch gekennzeichnet,
daß der Wenigstens eine Aufnahmeblock (36) in mindestens einer Richtung, vorzugsweise in drei zueinander orthogonalen Richtungen, verstellbar gelagert ist.

17. Sprüheinrichtung nach Anspruch 16,
dadurch gekennzeichnet,
daß der wenigstens eine Aufnahmeblock (36) an der Verteilerschiene (38) fest angebracht ist, daß die Verteilerschiene (38) an einem Verteilerschienenträger (46) in einer Schienenlängsrichtung (51) verschiebbar angeordnet ist, und daß der Verteilerschienenträger (46) an einer Koordinateneinstellvorrichtung (48, 54) in zwei zueinander und jeweils zur Schienenlängsrichtung (51) orthogonalen Richtungen (50, 56) verstellbar angeordnet ist.

18. Sprüheinrichtung nach einem der Ansprüche 13 bis 17,
dadurch gekennzeichnet,
daß zwischen benachbarten Glastropfenabgabestellen (24) jeweils zwei, gegebenenfalls baulich zusammengefaßte, Sprühdüsen (60a, 60b), gegebenenfalls mit Richtstrahlbohrungen (100), angeordnet sind, wobei jeder der durch die benachbarten Glastropfenabgabestellen (24) versorgten Hohlglasformen (10) jeweils eine dieser beiden Sprühdüsen (60a, 60b) zugeordnet ist, und daß endständigen Hohlglasformen (10) gegebenenfalls jeweils eine endständige Sprühdüse (60a, 60b), gegebenenfalls mit Richtstrahlbohrung (100), zugeordnet ist.

19. Sprüheinrichtung nach einem der Ansprüche 13 bis 18,
dadurch gekennzeichnet,
daß die einer der Mehrzahl von Hohlglasformen (10) zugeordneten Sprühdüsen (60a, 60b) über eine gemeinsame Zufuhrleitung (90) von einer Sprühmittelquelle mit Sprühmittel versorgt werden.

## Claims

1. A spraying device for spraying mould parts (10a,10b,16a,16b,16c) in a moulding machine, in particular a hollow glass moulding machine, comprising at least one spray nozzle (60a) to be opened by the application of spray medium under pressure, characterised in that the outlet of the spray nozzle (60a) is enclosed by a removable and replaceable jet-directing element (94) which defines a distributor chamber (98) adjoining downstream a nozzle outlet (96) and has at least one directional bore (100) adjacent to this distributor chamber (98).

2. A spraying device according to Claim 1, characterised in that if a plurality of spray nozzles (60a,60b) are structurally combined, in particular a pair of spray nozzles (60a,60b), the latter are associated with separate jet-directing plates (94) with a respective directional bore (100) or with a common jet-directing plate (94) with a respective directional bore (100).

3. A spraying device according to either of Claims 1 and 2, characterised in that the spray nozzle (60a) comprises a nozzle body (62) inserted in a mounting block (36), and in that the jet-directing element (94) can be secured to the mounting block (36) and serves simultaneously to secure the nozzle body (62) in the mounting block (36).

4. A spraying device according to Claim 3, characterised in that the nozzle body (62) is pre-secured in the mounting block (36), for example by frictional contact.

5. A spraying device according to either of Claims 3 and 4, characterised in that the mounting block (36) is secured to a distributor rail (38) designed to receive a plurality of mounting blocks (36), in that connecting ducts (88) are formed in the mounting block (36) and in that these connecting ducts (88) are connected to feed ducts (90) of the distributor rail (38).

6. A spraying device according to any one of Claims 1 to 5, characterised in that if a plurality of spray nozzles (60a,60b) are provided, at least part of these spray nozzles (60a,60b) is supplied with spray medium in each case independently of the others.

7. A spraying device according to any one of Claims 3 to 6, characterised in that the mounting block (36) is mounted adjustably in at least one direction, preferably in three directions perpendicular to one another.

8. A spraying device according to Claim 7, characterised in that the distributor rail (38) is displaceable in its longitudinal direction by a dovetail guide (44) or the like in a distributor rail support (46), and in that the distributor rail support (46) in turn is adjustable in a co-ordinate setting means (48, 54) with setting means (50, 56) being perpendicular to one another and to the longitudinal direction of the distributor rail (38).

9. A spraying device according to any one of Claims 1 to 8, characterised in that the length of the directional bore (100) corresponds to three to seven times, preferably five times, its diameter.

10. A spraying device according to any one of Claims 1 to 9, characterised in that the diameter of the directional bore (100) is less than about 0.5 mm, preferably about 0.2 mm.

11. A spraying device in a hollow glass moulding machine according to any one of Claims 1 to 10, characterised in that the mould parts (10a,10b;16) to be sprayed in the hollow glass moulding machine comprise two mould halves (10a,10b) which form a first mould cavity portion and which can be separated from a vertical parting plane, and also an orifice ring unit (16) disposed on one side of the first mould cavity portion situated opposite a glass drop dispensing station (24) and forming a second mould cavity portion, which orifice ring unit (16) has two orifice ring halves (16a,16b), which can also be separated from the vertical parting plane, and an end ring (16c) arranged inside the orifice ring unit (16) coaxially to the longitudinal axis thereof, wherein in their normal position the orifice ring halves (16a,16b) are situated opposite one another on either side of the second mould cavity portion with separating surfaces (16d,16e) and between at least two associated separating surfaces (16d,16e) a gap (16f) leading to the end ring (16c) is also formed in the closed position of the orifice ring halves (16a,16b).

12. A spraying device according to Claim 11, characterised in that the end ring (16c) is mounted in a floating manner in the orifice ring unit (16).

13. A spraying device in a hollow glass moulding machine having a plurality of separable hollow glass moulds (10) which are disposed one behind the other in a horizontal row and are separated in a vertical parting plane parallel to the direction of the row, with a corresponding plurality of glass drop dispensing stations (24) in vertical alignment over the upwardly open hollow glass moulds (10), and also with a plurality of spray nozzles (60a, 60b) for spraying the hollow glass moulds (10), characterised in that the spray nozzles (60a, 60b) are disposed approximately on the parting plane of the hollow glass moulds (10) on a distributor rail (38), which is arranged parallel to the parting plane in the vicinity of the glass drop dispensing stations and has at least one feed duct (90), between adjacent glass drop dispensing stations (24) and, optionally, adjacent end glass drop dispensing stations (24), and are connected with the feed duct (90).

14. A spraying device according to Claim 13, characterised in that the spray nozzles (60a, 60b) are accommodated in at least one associated mounting block (36).

15. A spraying device according to Claim 13 or 14, characterised in that the spray nozzles (60a, 60b) or the at least one mounting block (36) are disposed laterally on the distributor rail (38).

16. A spraying device according to Claim 14 or 15, characterised in that the at least one mounting block (36) is mounted adjustably in at least one direction, preferably in three directions orthogonal to one another.

17. A spraying device according to Claim 16, characterised in that the at least one mounting block (36) is securely mounted on the distributor rail (38), in that the distributor rail (38) is arranged displaceably on a distributor rail support (46) in a longitudinal direction (51) of the rail, and in that the distributor rail support (46) is arranged adjustably on a co-ordinate setting means (48, 54) in two directions (50, 56) orthogonal to one another and in each case to the longitudinal direction (51) of the rail.

18. A spraying device according to any one of Claims 13 to 17, characterised in that two spray nozzles (60a, 60b), optionally structurally combined and optionally with directional bores (100), are disposed respectively between adjacent glass drop dispensing stations (24), wherein each of the hollow glass moulds (10) supplied by the adjacent glass drop dispensing stations (24) is associated respectively with one of these two spray nozzles (60a, 60b), and in that end hollow glass moulds (10) are optionally associated with a respective end spray nozzle (60a, 60b), optionally having a directional bore (100).

19. A spraying device according to any one of Claims 13 to 18, characterised in that the spray nozzles (60a, 60b) associated with the plurality of hollow glass moulds (10) are supplied via a common supply duct (90) with spray medium from a spray medium source.

## Revendications

1. Dispositif de pulvérisation pour la pulvérisation de pièces de formage (10a, 10b, 16a, 16b, 16c) sur une machine de formage, en particulier une machine de formage de verre creux, comprenant au moins une buse de pulvérisation (60a) s'ouvrant par l'application d'une pression de produit de pulvérisation, caractérisé en ce que l'écoulement de sortie de la buse de pulvérisation (60a) est entouré par un élément d'orientation du jet (94) amovible et interchangeable, qui délimite vers l'aval, à la limite d'un écoulement de sortie de buse (96), un espace de distribution (98) et possède à la suite de cet espace de distribution (98) au moins un alésage à jet directionnel (100).

2. Dispositif de pulvérisation selon la revendication 1, caractérisé en ce que lors de la réunion de plusieurs buses de pulvérisation (60a, 60b) dans la construction, en particulier d'une paire de buses de pulvérisation (60a, 60b), des plaques d'orientation du jet (94) séparées sont associées à ces dernières avec un alésage à jet directionnel (100) respectif ou une plaque d'orientation du jet commune (94) leurs est associée avec un alésage à jet directionnel (100) respectif.

3. Dispositif de pulvérisation selon l'une quelconque des revendications 1 et 2, caractérisé en ce que la buse de pulvérisation (60a) comprend un corps de buse (62) introduit dans un bloc de logement (36) et en ce que l'élément d'orientation du jet (94) peut être fixé sur le bloc de logement (36) et sert ainsi en même temps à fixer le corps de buse (62) dans le bloc de logement (36).

4. Dispositif de pulvérisation selon la revendication 3, caractérisé en ce que le corps de buse (62) est fixé à l'avance dans le bloc de logement (36), de préférence par engagement par frottement.

5. Dispositif de pulvérisation selon l'une quelconque des revendications 3 et 4, caractérisé en ce que le bloc de logement (36) est fixé à un rail de distribution (38) conçu pour recevoir une pluralité de blocs de logement (36), en ce que des conduites de raccordement (88) sont construites dans le bloc de logement (36) et en ce que ces conduites de raccordement (88) sont raccordées à des conduites d'alimentation (90) du rail de distribution (38).

6. Dispositif de pulvérisation selon l'une quelconque des revendications 1 à 5, caractérisé en ce qu'en présence d'une pluralité de buses de pulvérisation (60a, 60b), une partie au moins de ces buses de pulvérisation (60a, 60b) est alimentée en produit de pulvérisation chacune indépendamment des autres.

7. Dispositif de pulvérisation selon l'une quelconque des revendications 3 à 6, caractérisé en ce que le bloc de logement (36) est supporté de façon réglable dans au moins une direction, de préférence dans trois directions perpendiculaires les unes aux autres.

8. Dispositif de pulvérisation selon la revendication 7, caractérisé en ce que le rail de distribution (38) peut coulisser dans son sens longitudinal à l'aide d'un guide en queue d'aronde (44) ou similaire dans un support de rail de distribution (46) et en ce que le support de rail de distribution (46) est réglable dans un dispositif de réglage de coordonnées (48, 54) pourvu de dispositifs de réglage (50, 56) perpendiculaires les uns aux autres et à l'axe longitudinal du rail de distribution (38).

9. Dispositif de pulvérisation selon l'une quelconque des revendications 1 à 8, caractérisé en ce que la longueur de l'alésage à jet directionnel (100) correspond à trois à sept fois, de préférence cinq fois, son diamètre.

10. Dispositif de pulvérisation selon l'une quelconque des revendications 1 à 9, caractérisé en ce que le diamètre de l'alésage à jet directionnel (100) est inférieur à 0,5 mm environ, de préférence environ 0,2 mm.

11. Dispositif de pulvérisation dans une machine de formage de verre creux selon l'une quelconque des revendications 1 à 10, caractérisé en ce que les pièces de formage (10a, 10b ; 16) destinées à recevoir la pulvérisation dans la machine de formage de verre creux comprennent deux moitiés de moule (10a, 10b) formant un premier secteur de creux de moule et pouvant être écartées à partir d'un plan de séparation vertical, ainsi qu'une unité annulaire d'embouchure (16) disposée sur le côté du premier secteur de creux de moule opposé à un point de dépose de gouttes de verre (24) et formant un deuxième secteur de creux de moule, unité annulaire qui présente deux moitiés d'anneau d'embouchure (16a, 16b) qui peuvent également être séparées à partir du plan de séparation vertical et un anneau de couverture (16c) disposé à l'intérieur de l'unité annulaire d'embouchure (16) de façon coaxiale de l'axe longitudinal de celle-ci, les moitiés d'anneau d'embouchure (16a, 16b) se faisant face dans leur position de base des deux côtés du deuxième secteur de creux de moule par des surfaces de séparation (16d, 16e), et une fente (16f) menant à l'anneau de couverture (16c) étant formée entre au moins deux surfaces de séparation (16d, 16e) associées, même dans la position de fermeture des moitiés d'anneau d'embouchure (16a, 16b).

12. Dispositif de pulvérisation selon la revendication 11, caractérisé en ce que l'anneau de couverture (16c) est logé de manière flottante dans l'unité d'anneau d'embouchure (16).

13. Dispositif de pulvérisation sur une machine de formage de verre creux avec une pluralité de moules à verre creux (10) divisibles, qui sont disposés en rangée horizontale les uns derrières les autres et divisés dans un plan de division vertical parallèle à la direction de la rangée, avec une pluralité correspondante de points de dépose de gouttes de verre (24) en alignement vertical au-dessus des moules à verre creux (10) ouverts vers le haut, ainsi qu'avec une pluralité de buses de pulvérisation (60a, 60b) pour la pulvérisation des moules à verre creux (10), caractérisé en ce que les buses de pulvérisation (60a, 60b) sont disposées sur un rail de distribution (38) disposé parallèlement au plan de division dans le secteur des points de dépose des gouttes de verre et présentant au moins une conduite d'alimentation (90), entre des points de dépose de gouttes de verre (24) voisins et éventuellement à la limite des points de dépose de gouttes de verre (24) d'extrémité approximativement dans le plan de division des moules à verre creux (10), et sont reliées à la conduite d'alimentation (90).

14. Dispositif de pulvérisation selon la revendication 13, caractérisé en ce que les buses de pulvérisation (60a, 60b) sont logées dans au moins un bloc de logement (36) associé.

15. Dispositif de pulvérisation selon la revendication 13 ou 14, caractérisé en ce que les buses de pulvérisation (60a, 60b) ou le bloc de logement (36) au nombre d'un au moins sont disposés latéralement sur le rail de distribution (38).

16. Dispositif de pulvérisation selon la revendication 14 ou 15, caractérisé en ce que le bloc de logement (36) au nombre d'un au moins est supporté de façon réglable dans au moins une direction, de préférence dans trois directions orthogonales les unes aux autres.

17. Dispositif de pulvérisation selon la revendication 16, caractérisé en ce que le bloc de logement (36) au nombre d'un au moins est fixé sur le rail de distribution (38), en ce que le rail de distribution (38) est disposé de façon coulissante sur un support de rail de distribution (46) dans un sens longitudinal du rail (51), et en ce que le support de rail de distribution (46) est disposé de façon réglable dans deux directions (50, 56) orthogonales entre elles et par rapport à l'axe longitudinal du rail (51) sur un dispositif de réglage de coordonnées (48, 54).

18. Dispositif de pulvérisation selon l'une quelconque des revendications 13 à 17, caractérisé en ce qu'il est prévu entre des points de dépose de gouttes de verre (24) voisins deux buses de pulvérisation (60a, 60b), éventuellement réunies dans la construction, éventuellement pourvues d'alésages à jet directionnel (100), chacun des moules à verre creux (10) alimenté par les points de dépose de gouttes de verre (24) voisins étant associé à l'une de ces deux buses de pulvérisation (60a, 60b), et en ce que des moules à verre creux (10) d'extrémité sont éventuellement associés chacun à une buses de pulvérisation (60a, 60b) d'extrémité, éventuellement pourvue d'un alésage à jet directionnel (100).

19. Dispositif de pulvérisation selon l'une quelconque des revendications 13 à 18, caractérisé en ce que les buses de pulvérisation (60a, 60b) associées à une pluralité de moules à verre creux (10) sont alimentées en produit de pulvérisation, par une conduite d'alimentation (90) commune, à partir d'une source de produit de pulvérisation.
